(19) Europäisches Patentamt / European Patent Office / Office européen des brevets

(11) **EP 4 413 742 B1**

(12) **FASCICULE DE BREVET EUROPEEN**

(45) Date de publication et mention
de la délivrance du brevet:
**25.03.2026 Bulletin 2026/13**

(21) Numéro de dépôt: **22798133.9**

(22) Date de dépôt: **05.10.2022**

(51) Classification Internationale des Brevets (IPC):
**H04N 23/957** (2023.01)  **G02B 27/00** (2006.01)

(52) Classification Coopérative des Brevets (CPC):
**H04N 23/957; G02B 27/0075; H04N 23/54;
H04N 23/55**

(86) Numéro de dépôt international:
**PCT/EP2022/077682**

(87) Numéro de publication internationale:
**WO 2023/057502 (13.04.2023 Gazette 2023/15)**

(54) **DISPOSITIF D'IMAGERIE PLÉNOPTIQUE AVEC IMAGE INTERMÉDIAIRE VIRTUELLE**

PLENOPTISCHE BILDGEBUNGSVORRICHTUNG MIT VIRTUELLEM ZWISCHENBILD

PLENOPTIC IMAGING DEVICE WITH A VIRTUAL INTERMEDIATE IMAGE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **06.10.2021 FR 2110579**

(43) Date de publication de la demande:
**14.08.2024 Bulletin 2024/33**

(73) Titulaires:
• **Ecole Polytechnique**
**91120 Palaiseau (FR)**
• **Centre National de la Recherche Scientifique**
**75016 Paris (FR)**
• **École Nationale Supérieure de Techniques
Avancées**
**91120 Palaiseau (FR)**

(72) Inventeur: **ZEITOUN, Philippe**
**75014 PARIS (FR)**

(74) Mandataire: **Atout PI Laplace
Immeuble Up On
25 Boulevard Romain Rolland
CS 40072
75685 Paris Cedex 14 (FR)**

(56) Documents cités:
**US-A1- 2016 057 407**

• **HERZOG CHARLOTTE: "plenoptic imaging :
from visible light to X-rays", 24 September 2020
(2020-09-24), XP055918067, Retrieved from the
Internet <URL:https://tel.archives-ouvertes.fr/
tel-03129863/file/HERZOG_CHARLOTTE_2020.
pdf> [retrieved on 20220504]**
• **SOWA KATARZYNA M ET AL: "Plenoptic x-ray
microscopy", APPLIED PHYSICS LETTERS,
AMERICAN INSTITUTE OF PHYSICS, 2
HUNTINGTON QUADRANGLE, MELVILLE, NY
11747, vol. 116, no. 1, 6 January 2020
(2020-01-06), XP012243486, ISSN: 0003-6951,
[retrieved on 20200106], DOI: 10.1063/1.5131494**

**Description**

**Domaine technique :**

La présente invention concerne le domaine des dispositifs d'imagerie plénoptique et le domaine de l'imagerie par rayons X.

**Technique antérieure :**

Les appareils photos numériques conventionnels fournissent une image bidimensionnelle d'une scène tridimensionnelle. Cette image bidimensionnelle représente la quantité totale de lumière qui éclaire chaque point sur le photodétecteur au sein de l'appareil. Cependant, cette image bidimensionnelle ne contient aucune information sur la direction de la lumière qui illumine le photodétecteur.

A l'inverse, les dispositifs d'imagerie plénoptique échantillonnent le champ lumineux 4-D provenant d'une scène. Le champ lumineux 4D ou radiance (ou *« light-field »* en anglais) est une représentation de tous les rayons de lumière dans l'espace libre. C'est une fonction $r(\boldsymbol{q}, \boldsymbol{p})$ ou $\boldsymbol{q}, \boldsymbol{p}$ sont des vecteurs qui représentent la position et la direction d'un rayon intersectant un plan transverse à l'axe optique. Dans un dispositif d'imagerie plénoptique, l'échantillonnage de la direction du champ lumineux est réalisé par une mesure de l'inclinaison des rayons par exemple *via* une matrice de microlentilles.

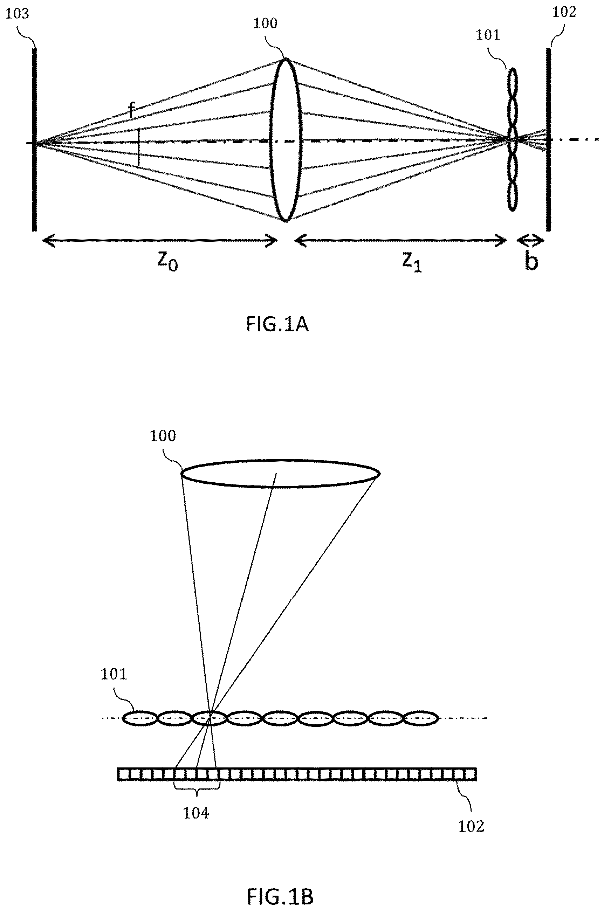

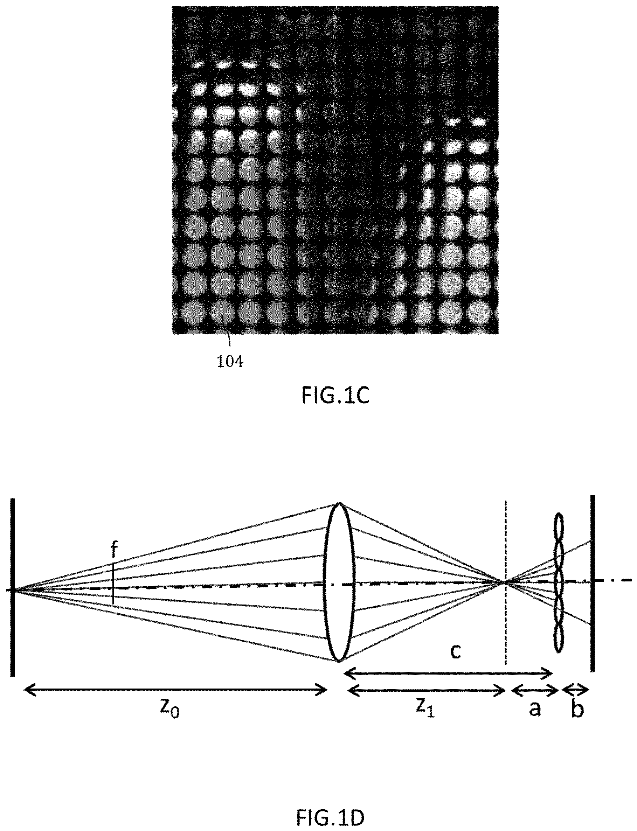

Les figures 1A et 1D illustrent deux configurations de dispositif d'imagerie plénoptique connues de l'homme de l'art, dénommées respectivement configuration « traditionnelle » et configuration « focalisée ».

Dans la configuration traditionnelle, illustrée en figure 1A, le dispositif comprend une lentille principale objectif 100, une matrice de microlentilles 101 et un photodétecteur matriciel 102. Dans cette configuration, la matrice de microlentilles est disposée dans un plan conjugué optiquement par la lentille principale avec le plan objet, c'est-à-dire que $\frac{1}{z_0} + \frac{1}{z_1} = \frac{1}{f_1}$ , avec $z_0$ la distance entre l'objet 103 et la lentille principale 100, $z_1$ la distance entre la lentille principale 100 et la matrice de microlentille 101 et $f_1$ la focale de la lentille principale. De cette manière l'image de l'objet, image intermédiaire, est formée directement dans le plan de la matrice de microlentille 101. Dans la configuration traditionnelle, le photodétecteur 102 est placé à une distance $b$ de la matrice de microlentilles 101 égale à la distance focale $f_2$ de chaque microlentille. De cette manière, la matrice de microlentilles est focalisée à l'infini. Comme la distance $z_1$ entre la lentille principale 100 et la matrice de microlentille 101 est très supérieure à la distance focale $f$ , cela revient à dire que la matrice de microlentille est focalisée sur la lentille principale 100. Ainsi, l'image enregistrée par le photodétecteur 102 est formée d'une pluralité de micro-images de la lentille principale.

Comme l'illustre la figure 1B, la matrice de microlentille 101 permet de séparer les composantes spatiales des composantes angulaires. Les composantes spatiales sont échantillonnées directement par les microlentilles car chaque microlentille est associée à une portion différente de l'image formée par la lentille principale. La détection des composantes angulaires est réalisée par les pixels de chaque micro-image 104. En effet, chaque microlentille sépare un faisceau provenant de la lentille principale en des rayons provenant de différentes portions de l'ouverture de la lentille principale. Chacun de ces rayons est détecté par un pixel du photodétecteur et les pixels formant chaque micro image 104 sont associés à différents angles des rayons.

La figure 1C présente un exemple d'une image plénoptique « brute » ou image du champ lumineux obtenue par un dispositif plénoptique et formée par l'ensemble des micro-images, tirée de Ren Ng. Digital Light Field Photography. PhD thesis, Stanford University, CA, USA, 2006. AAI3219345 ou encore dans Lumsdaine, A., & Georgiev, T. (2009, April). A partir de l'information angulaire contenue dans cette image du champ lumineux, il est possible de reconstruire une image focalisée à une certaine profondeur avec des algorithmes de *refocusing.* Pour cela, le champ lumineux est extrait de l'image plénoptique brute et rétroprojeté dans l'espace objet. Cette étape peut être réalisée de différentes manières (stereo-estimation, algorithme *shift-and-sum algorithm, rendering with blending,* méthode *"superresolution"...).* L'algorithme imite synthétiquement l'action de la focalisation optique sur un capteur, comme si l'image était acquise par un appareil photo classique. L'image résultante contient les éléments mis au point qui correspondent à la profondeur du *refocusing,* mais aussi les éléments hors-focus des plans de profondeur adjacents. Une reconstruction avec l'algorithme de *refocusing* possède les mêmes propriétés qu'avec la photographie classique : les éléments focalisés sont reconstruits de façon nette, alors que les éléments hors-focus sont flous. Une description précise de certains algorithmes de *refocusing* peut être trouvée dans Ren Ng. Digital Light Field Photography. PhD thesis, Stanford University, CA, USA, 2006. AAI3219345, Todor Georgiev, Georgi Chunev, and Andrew Lumsdaine. Superresolution with the focused plenoptic camera. SPIE Electronic Imaging,7873:1-13, 2011, ou encore dans Lumsdaine, A., & Georgiev, T. (2009, April). The focused plenoptic camera. In 2009 IEEE International Conference on Computational Photography (ICCP) (pp. 1-8). IEEE.

A la différence de la configuration traditionnelle, dans la configuration focalisée, l'image intermédiaire n'est pas formée dans le plan de la matrice de microlentilles ML. Cette matrice peut être respectivement placée avant ou après (comme cela est illustré en figure 1B) l'image intermédiaire formée par la lentille principale. La principale différence entre les deux méthodes est que, dans la configuration focalisée, les propriétés des micro images varient en fonction de la profondeur de l'objet dans l'espace objet. Ainsi, le grandissement de chaque micro-image varie en fonction de la profondeur de l'objet dans l'espace objet. De plus, il existe un décalage latéral de la position imagée par les micro-images adjacentes en fonction de la profondeur. La configuration focalisée permet une plus grande résolution spatiale mais une résolution angulaire plus faible que la configuration traditionnelle (voir Lumsdaine, A., & Georgiev, T. (2009, April). The focused plenoptic camera. In 2009 IEEE International Conference on Computational Photography (ICCP) (pp. 1-8). IEEE.).

Les dispositifs d'imagerie plénoptique offrent théoriquement la possibilité de reconstruire une image 3D d'un échantillon partiellement transparent aux rayons X en refocalisant une image 2D de l'échantillon en différents plans. Cependant, pour les dispositifs d'imagerie plénoptique qui possèdent des résolutions limitées par la diffraction de la lentille principale, les résolutions latérale et longitudinale varient en $1/NA$ et $1/NA^2$, avec NA l'ouverture numérique objet de la lentille principale. Or, dans le domaine des rayons-X dur (donc pour des énergies de photons supérieures à quelques keV), les optiques actuellement possèdent des ouvertures numériques très faibles (typiquement inférieure à 0.001). Cette faible ouverture numérique produit alors des voxels présentant une dimension associée à la profondeur qui est plus grande plusieurs ordres de grandeur que les deux autres dimensions associées à la résolution latérale. La reconstruction en 3 dimensions est alors très compliquée en raison d'une très forte perte de résolution longitudinale.

L'invention vise à pallier certains problèmes de l'art antérieur. A cet effet, un objet de l'invention est un dispositif d'imagerie plénoptique dans lequel l'objet est placé entre le plan focal objet et la lentille principale afin de créer une image virtuelle placée du côté de l'objet pour la lentille principale. Cette nouvelle configuration produit une amélioration de la résolution latérale, longitudinale et angulaire et de la profondeur de champ comparativement à un dispositif de l'art antérieur avec une configuration focalisée, ce qui est un avantage majeur pour la réalisation de caméra plénoptique dans les rayons X qui sont pour l'instant très handicapées par la faible ouverture numérique des optiques X. Comparativement à un dispositif de l'art antérieur avec une configuration traditionnelle, le dispositif de l'invention permet une amélioration de la résolution latérale et longitudinale.

## Résumé de l'invention :

A cet effet, un objet de l'invention est un dispositif d'imagerie plénoptique pour former une image du champ lumineux d'un objet comprenant :

- un porte échantillon adapté pour maintenir ledit objet,

- un ensemble optique principal, agencé pour focaliser des rayons du champ lumineux dudit objet, à une distance $z_0$ dite objet du porte échantillon inférieure à une distance focale objet $f_1$ dudit ensemble optique principal de manière à former une image virtuelle intermédiaire dudit objet dans un plan image intermédiaire à une distance $z_1$ dudit ensemble optique,

- un ensemble d'échantillonnage du champ lumineux adapté pour acquérir une information spatio-directionelle des rayons formant l'image virtuelle et pour former ladite image du champ lumineux.

Dans un mode de réalisation préféré de l'invention, ledit ensemble d'échantillonnage du champ lumineux comprend

- un photodétecteur matriciel

- une matrice de microlentilles agencée à une distance $a$ du plan image intermédiaire, le photodétecteur étant agencé à une distance $b$ de la matrice de microlentille, chaque microlentille étant de diamètre $d_2$ et présentant une distance focale $f_2$ et étant adaptée pour former une micro-image d'une partie respective de l'image virtuelle de l'objet sur une portion respective du photodétecteur, chaque dite portion comprenant une pluralité de pixels, les micro-images formant ladite image du champ lumineux.

De manière préférentielle, dans ce mode de réalisation préféré, une ouverture numérique image $NA_{im,LP}$ de l'ensemble optique principal est inférieure ou égale à une ouverture numérique image $NA_{im,ML}$ de chaque microlentille.

De manière préférentielle, dans ce mode de réalisation préféré, le photodétecteur est dans un plan conjugué du plan image intermédiaire par la matrice de microlentilles.

De manière préférentielle, dans ce mode de réalisation préféré, on a $\dfrac{d_1}{z_{1+a+b}} = \dfrac{d_2}{b}$ , avec $d_1$ le diamètre de l'ouverture de l'ensemble optique principal.

De manière préférentielle, dans ce mode de réalisation préféré, une distance $c$ entre la matrice de microlentille et l'ensemble optique principal est supérieure à ladite distance $z_1$.

Selon un mode de réalisation du dispositif de l'invention, le dispositif comprend un processeur adapté pour mettre en œuvre un algorithme de *refocusing* permettant de reconstruire une image de profondeur ou une image 3D de l'objet à partir de ladite image du champ lumineux.

Selon un mode de réalisation du dispositif de l'invention, l'ensemble optique principal et la matrice de microlentilles sont adaptés pour les rayons X.

Selon un mode de réalisation du dispositif de l'invention, l'ensemble optique principal est un « photon sieves ».

Selon un mode de réalisation du dispositif de l'invention, le dispositif de l'invention comprend une source de rayons X illuminant ledit objet de manière à former ledit champ lumineux de l'objet.

Un autre objet de l'invention est un procédé d'utilisation d'un tel dispositif d'imagerie plénoptique comprenant un ensemble optique principal et un ensemble d'échantillonnage du champ lumineux, ledit procédé comprenant les étapes suivantes :

- placer ledit dispositif de sorte qu'une distance $z_0$ dite objet entre un objet à imager et ledit ensemble optique principal soit inférieure à une distance focale objet $f_1$ dudit ensemble optique principal de manière à former une image virtuelle intermédiaire,

- acquérir, avec l'ensemble d'échantillonnage du champ lumineux, une information spatio-directionelle des rayons formant l'image virtuelle afin de former une image du champ lumineux de l'objet.

## Brève description des figures :

D'autres caractéristiques, détails et avantages de l'invention ressortiront à la lecture de la description faite en référence aux dessins annexés donnés à titre d'exemple et qui représentent, respectivement :

[Fig.1A] une vue schématique d'un dispositif d'imagerie plénoptique connu de l'homme de l'art,

[Fig.1B], une vue schématique de rayons formant une micro-image dans un dispositif d'imagerie plénoptique connu de l'homme de l'art,

[Fig.1C], une image du champ lumineux acquise par un dispositif d'imagerie plénoptique connu de l'homme de l'art,

[Fig.1D] une vue schématique d'un dispositif d'imagerie plénoptique connu de l'homme de l'art,

[Fig.2] une vue schématique d'un dispositif d'imagerie plénoptique selon l'invention,

[Fig.3] une représentation des ouvertures numériques de l'ensemble optique principal et d'une ouverture numérique image de chaque microlentille dans le dispositif d'imagerie plénoptique selon l'invention.

Dans les figures, sauf contre-indication, les éléments ne sont pas à l'échelle.

## Description détaillée :

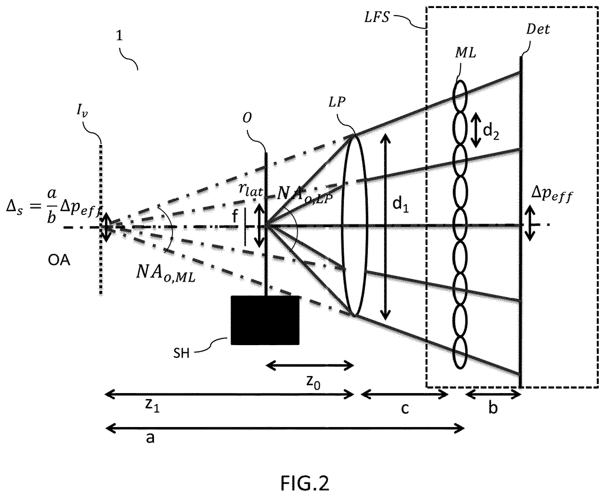

La figure 2 illustre un dispositif 1 d'imagerie plénoptique selon l'invention, pour former une image du champ lumineux d'un objet O particulièrement adapté pour fonctionner dans le domaine des rayons X. Pour rappel, par « image du champ lumineux », on entend une image comprenant à la fois une information sur l'intensité du champ lumineux et une information sur la direction des rayons formant le champ lumineux. Pour réaliser cette image, comme les dispositifs de l'art antérieur, le dispositif d'imagerie plénoptique selon l'invention comprend un ensemble optique principal LP et un ensemble d'échantillonnage du champ lumineux LFS. De plus, le dispositif 1 comprend un porte échantillon SH adapté pour maintenir l'objet O en place.

L'ensemble optique principal LP, d'axe optique OA, est agencé pour focaliser des rayons du champ lumineux de l'objet. L'ensemble LP est placé à une distance objet $z_0$ du porte échantillon SH qui est inférieure à une distance focale objet $f_1$ de l'ensemble optique principal LP. Ainsi, l'ensemble LP forme une image virtuelle intermédiaire $I_v$ de l'objet à une distance $z_1$ de l'ensemble optique, dans un plan image intermédiaire. On définit M = $z_1/z_0$ le grandissement de l'ensemble optique principal LP. L'ensemble optique principale LP est un objectif formé d'un ensemble d'un ou plusieurs composants optiques réfractifs ou diffractifs selon la longueur d'onde des rayons formant le champ lumineux de l'objet.

Contrairement aux dispositifs plénoptiques de l'art antérieur, la distance $z_0$ est inférieure à la distance focale objet $f_1$. Ce choix permet d'augmenter l'ouverture numérique objet $NA_{o,LP}$ de l'ensemble optique principal. Comme cela sera expliqué plus loin, cela produit deux avantages comparativement aux dispositifs d'imagerie plénoptique de l'art antérieur fonctionnant avec une configuration focalisée formant une image côté image de la lentille principale: une amélioration de la résolution angulaire et une meilleure résolution latérale et longitudinale. Comparativement à un dispositif d'imagerie plénoptique de l'art antérieur fonctionnant avec une configuration traditionnelle, la résolution latérale et longitudinale est améliorée. Pour clarification, la « résolution longitudinale » correspond à la distance minimale séparant deux plans de l'objet reconstructibles par le dispositif, les plans étant perpendiculaires à l'axe optique OA.

Enfin, le dispositif comprend un ensemble d'échantillonnage du champ lumineux LFS adapté pour acquérir une information spatio-directionelle des rayons formant l'image virtuelle et pour former l'image du champ lumineux. Cet ensemble LFS est connu de l'homme de l'art. Selon un mode de réalisation préféré de l'invention, illustré en figure 2, cet ensemble comprend un photodétecteur matriciel Det et une matrice de microlentilles ML. La matrice ML comprend des microlentilles identiques, de diamètre $d_2$ et de distance focale $f_2$. A titre d'exemple non limitatif, le photodétecteur Det peut être un capteur CCD ou CMOS, adapté en fonction d'une longueur d'onde des rayons formant le champ lumineux de l'objet.

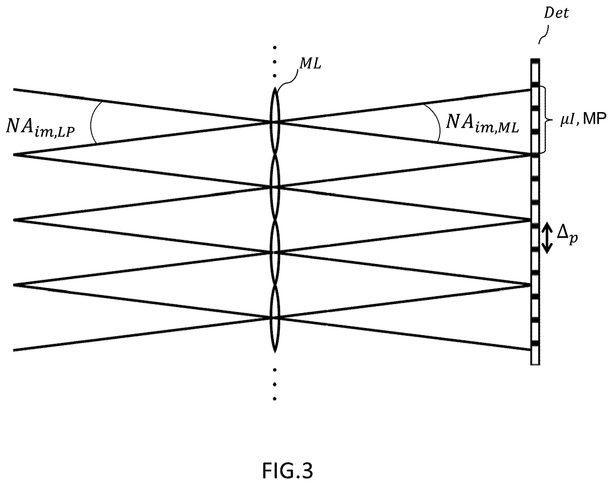

La figure 2 illustre différents paramètres du dispositif. La matrice de microlentilles ML est agencée à une distance $a$ du plan image intermédiaire et le photodétecteur est agencé à une distance *b* de la matrice de microlentille. Comme dans la configuration focalisée illustrée en figure 1D, dans le dispositif 1 de l'invention, le photodétecteur Det est dans un plan conjugué du plan image intermédiaire par la matrice de microlentilles, de sorte que $\frac{1}{a} + \frac{1}{b} = \frac{1}{f_2}$ . On définit le grandissement de chaque microlentille $m = \frac{b}{a}$ . Chaque microlentille de la matrice ML est adaptée pour former une micro-image $\mu l$ d'une partie respective de l'image virtuelle $I_v$ de l'objet sur une portion respective du photodétecteur MP. Cette micro-image n'est pas visible en figure 2 mais est représentée en figure 3. Cette portion MP du photodétecteur, appelée aussi macropixel, comprend une pluralité de pixels. L'ensemble des micro-images forme l'image du champ lumineux de l'objet.

Le dispositif de l'invention est une évolution du dispositif de l'art antérieur avec une configuration focalisée illustré en figure 1D. Dans la section qui suit, on détaille comment cette évolution permet une amélioration de certains paramètres du dispositif de l'invention.

Dans le dispositif de l'invention, comme dans un dispositif de l'art antérieur avec une configuration focalisée, la résolution latérale est donnée par la valeur maximale entre 3 dimensions représentant la diffraction par l'ensemble optique principal, la diffraction par chaque microlentille et la dimension d'un pixel du photodétecteur. Dans le plan image intermédiaire, la résolution donnée par la diffraction par l'ensemble principal selon le critère de Sparrow est $R_{obj} = \frac{0.47\lambda}{NA_{o,LP}} \times M$, avec $\lambda$ la longueur d'onde des rayons formant le champ lumineux. De même, dans le plan du photodétecteur, la résolution donnée par la diffraction par une microlentille selon le critère de Sparrow est $r_{obj} = \frac{0.47\lambda}{NA_{o,ML}} \times m$ , avec $NA_{o,ML}$ une ouverture numérique objet d'une microlentille. En comparant ces dimensions dans l'espace du photodétecteur, on obtient une taille de pixel effectif $\Delta p_{eff}$ qui vaut :

$$\Delta p_{eff} = \max(m.R_{obj} \, ; \, r_{obj} \, ; \Delta_p) \text{ (Eq1)}.$$

En supposant que la taille de pixel ne soit pas l'élément limitant la résolution et en se plaçant dans l'espace objet de la lentille principale, et on obtient alors que la résolution latérale $r_{lat}$ du dispositif vaut :

$$r_{lat} = \frac{\max(m.R_{obj} \, ; \, r_{obj})}{M \times m} \text{ (Eq2)}$$

De même, on peut prouver que la résolution longitudinale vaut :

$$r_{long} = \frac{r_{lat}}{NA_{o,LP}} + \frac{\lambda}{NA^2_{o,LP}} \text{ (Eq3)}.$$

Afin de comparer les résolutions latérale et longitudinale entre le dispositif de l'invention et le dispositif de l'art antérieur en configuration focalisée, il faut donc comparer comment évoluent les différents paramètres des équations Eq2 et Eq3.

Les dispositifs d'imagerie plénoptique de l'art antérieur fonctionnant avec une configuration focalisée présentent un grandissement de l'ensemble optique principal $M = z_1/z_0$ plus faible que celui de l'invention (car $z_0$ est plus faible dans l'invention et $z_1$ est plus grand dans l'invention). Cependant, ils présentent un grandissement $m = b/a$ plus important que l'invention. En outre, le dispositif de l'invention possède une ouverture $NA_{o,ML}$ plus faible et une ouverture $NA_{o,LP}$ plus grande que le dispositif de l'art antérieur avec une configuration focalisée.

Dans le dispositif de l'invention, de manière préférentielle la matrice de microlentille est adaptée de manière à ce que la résolution latérale $r_{lat}$ soit fixée par $R_{obj}$, c'est-à-dire de sorte que $m. R_{obj} > r_{obj}$. Ainsi, la résolution latérale vaut $r_{lat} = \frac{0.47\lambda}{m \times NA_{o,LP}}$ . Afin que le dispositif de l'invention permette une amélioration de la résolution latérale $r_{lat}$ par rapport au dispositif de l'art antérieur avec une configuration focalisée, il faut que le produit $m \times NA_{o,LP}$ reste supérieur à 1 lorsqu'on passe d'un dispositif de l'art antérieur avec une configuration focalisée au dispositif de l'invention. Cela revient à choisir la distance b dans l'invention, telle que $m \times NA_{o,LP}$ reste supérieur à 1 lorsqu'on passe d'un dispositif de l'art antérieur avec une configuration focalisée au dispositif de l'invention, ou encore $b > a \times d_1$.

Grâce à l'équation Eq3 il est clair que le dispositif de l'invention permet de grandement améliorer la résolution longitudinale par rapport au dispositif de l'art antérieur avec une configuration focalisée, lorsque la résolution latérale $r_{lat}$ diminue elle aussi.

On s'intéresse à présent à la résolution angulaire. Pour rappel, la résolution angulaire correspond à la quantité de composantes angulaires différentes -c'est-à-dire de directions- collectées pour chaque position spatiale. Pour une position spatiale donnée dans le plan image intermédiaire, les directions associées sont réparties sur plusieurs microlentilles (voir figure 2). Aussi, estimer la résolution angulaire revient à estimer le nombre de micro-lentilles qui captent ces directions. Dans le dispositif de l'invention et dans un dispositif de l'art antérieur avec une configuration focalisée, la résolution angulaire $N_u$ est donnée par la relation suivante :

$$N_u = (d_1 a)/(z_1 d_2) \text{ (Eq4)}$$

On                                        définit

$a = c - z_1 <=> \frac{a}{z_1} = \frac{c}{z_1} - 1$ , avec $c$ la distance entre la matrice de microlentille et l'ensemble optique principal (voir figure 2). On déduit de Eq4 alors que la résolution angulaire augmente grâce à la configuration de l'invention par rapport à celle d'un dispositif de l'art antérieur avec une configuration focalisée, si $c > 2z_1$.

La profondeur de champ plénoptique correspond à la plage de profondeur sur laquelle il est possible de reconstruire une image nette à partir d'une seule acquisition. Dans le dispositif de l'invention et dans un dispositif de l'art antérieur avec une configuration focalisée, la profondeur de champ plénoptique $DOF_p$ est donnée par la relation suivante :

$$DOF_p = N_u \frac{r_{lat}}{NA_{o,LP}} + \frac{\lambda}{NA^2_{o,LP}} \text{ (Eq5)}$$

L'équation 5 implique qu'avec une géométrie adaptée, lorsque le dispositif de l'invention permet une augmentation de résolution angulaire $N_u$ supérieure à une diminution de la résolution latérale $r_{lat}$, la profondeur de champ plénoptique augmente comparativement à celle d'un dispositif avec une configuration focalisée, compte tenu d'une ouverture $NA_{o,LP}$ plus grande.

Ainsi, grâce à un montage optique approprié, le dispositif optique de l'invention permet une amélioration de la résolution latérale, longitudinale et angulaire et de la profondeur de champ comparativement à un dispositif de l'art antérieur avec une configuration focalisée. Dans le domaine de l'imagerie plénoptique par rayons-X, cela permet de contourner partiellement la limitation imposée par la faible ouverture numérique des optiques habituellement utilisées.

En outre, le dispositif de l'invention est plus compact qu'un dispositif de l'art antérieur avec une configuration focalisée, car la distance b est diminuée.

Dans le dispositif de l'invention, il est souhaitable d'éviter un chevauchement des micro-images dans le plan du photodétecteur qui induirait une perte d'information spatio-directionelle et nuirait à la reconstruction focalisée de l'image. Pour cela, il est nécessaire qu'une ouverture numérique image $NA_{im,LP}$ de l'ensemble optique principal soit inférieure ou égale à une ouverture numérique image $NA_{im,ML}$ de chaque microlentille. La figure 3 illustre le mode de réalisation de l'invention préféré, dans lequel l'ouverture numérique image $NA_{im,LP}$ de l'ensemble optique principal est égale à l'ouverture numérique image $NA_{im,ML}$ de chaque microlentille. Pour cela, dans ce mode de réalisation, on

a $\frac{d_1}{z_1 + a + b} = \frac{d_2}{b}$ . Ainsi, les micro-images sont adjacentes dans le plan du photodétecteur et on optimise l'utilisation du nombre de pixel du photodétecteur. On note que l'égalité précédente est différente de celle précisée par l'art antérieur (voir par exemple Todor Georgiev and Andrew Lumsdaine. Reducing plenoptic camera artifacts. Computer Graphics Forum, 29(6):1955-1968, 2010.) qui effectuait l'approximation $z_1$ « $a$, $b$, qui est incorrecte dans le dispositif de l'invention.

Selon un mode de réalisation préféré de l'invention, le porte échantillon SH est adapté pour être déplacé par rapport à l'ensemble optique principal. En outre, de préférence, la matrice de microlentille et le photodétecteur sont montés sur des étages de translation respectifs. Ce mode de réalisation permet de contrôler facilement les distances $z_0$, $c$ et $b$ et donc permet de modifier les résolutions et la profondeur de champ plénoptique du dispositif.

Selon un mode de réalisation de l'invention, l'ensemble optique principal et la matrice de microlentilles sont adaptés pour les rayons X (d'environ 0.01nm à 10nm). Par exemple, la matrice de microlentilles est formée d'une matrice de lentilles de Fresnel (*Fresnel Zone Plate* en anglais) et l'ensemble optique principal comprend une ou plusieurs lentilles de Fresnel ou un élément de type *photon sieves.* Par « *photon sieves* », on entend ici une membrane opaque au rayonnement et comprenant une pluralité d'ouvertures agencées de manière appropriée dans la zone de Fresnel d'un faisceau, de manière à le focaliser à une taille inférieure à la dimension des ouvertures en jouant sur les interférences constructives et destructives de la lumière diffractée par les ouvertures (voir par exemple Kipp, L., Skibowski, M., Johnson, R. L., Berndt, R., Adelung, R., Harm, S., & Seemann, R. (2001). Sharper images by focusing soft X-rays with photon sieves. Nature, 414(6860), 184-188.).

Alternativement, selon un autre mode de réalisation, l'ensemble optique principal comprend une ou plusieurs lentilles réfractives et la matrice de microlentilles comprend une pluralité de lentilles réfractives.

Selon un mode de réalisation de l'invention, le dispositif 1 comprend un processeur relié au photodétecteur et adapté pour mettre en œuvre un algorithme de *refocusing* permettant de reconstruire une image de profondeur ou une image 3D de l'objet à partir de l'image du champ lumineux. En effet, lorsque l'objet est partiellement transparent au rayonnement l'illuminant, il est possible de reconstruire la structure interne de l'objet en refocalisant une image 2D de l'échantillon en différents plans perpendiculaire à l'axe optique et séparés chacun d'une distance correspondant à la résolution longitudinale. Les algorithmes de *refocusing* ne sont pas l'objet de l'invention et sont connus de l'homme de l'art (voir Ren Ng. Digital Light Field Photography. PhD thesis, Stanford University, CA, USA, 2006. AAI3219345 ou Lumsdaine, A., & Georgiev, T. (2009, April). The focused plenoptic camera. In 2009 IEEE International Conference on Computational Photography (ICCP) (pp. 1-8). IEEE).

Selon un autre mode de réalisation de l'invention, différent de celui illustré en figure 2, l'ensemble d'échantillonnage du champ lumineux LFS comprend une matrice de d'ouvertures circulaires au lieu d'une matrice de microlentille. Dans ce cas, les micro-images sont formées par les ouvertures circulaires sur le photodétecteur à condition que le diamètre $d_2$ des ouvertures le permette. De manière connue en soit, il est préférable que le diamètre $d_2$ des ouvertures soit

$$d_2 = 1.562\sqrt{b\lambda} \text{ à } \pm 10\%.$$

Un autre objet de l'invention est un procédé d'utilisation d'un dispositif d'imagerie plénoptique comprenant un ensemble optique principal LP et un ensemble d'échantillonnage du champ lumineux LFS. Ce procédé comprend les étapes suivantes :

- placer le dispositif de sorte que la distance $z_0$ entre l'objet à imager et ledit ensemble optique principal soit inférieure à la distance focale objet $f_1$ de l'ensemble optique principal, de manière à former l'image virtuelle intermédiaire $I_v$ placé du côté objet de l'ensemble optique principal,

- acquérir, avec l'ensemble d'échantillonnage du champ lumineux, l'information spatio-directionelle des rayons formant l'image virtuelle afin de former l'image du champ lumineux de l'objet.

Comme expliqué plus haut, ce procédé permet d'augmenter l'ouverture numérique objet $NA_{o,LP}$ de la lentille principale, ce qui permet, selon la configuration du dispositif, d'augmenter les différentes résolutions du dispositif et la profondeur de champ plénoptique.

**Revendications**

1. Dispositif (1) d'imagerie plénoptique pour former une image du champ lumineux d'un objet (O) comprenant :

     - un porte échantillon (SH) adapté pour maintenir ledit objet,
     - un ensemble optique principal (LP), agencé pour focaliser des rayons du champ lumineux dudit objet, à une distance $z_0$ dite objet du porte échantillon inférieure à une distance focale objet $f_1$ dudit ensemble optique principal de manière à former une image virtuelle intermédiaire ($I_v$) dudit objet dans un plan image intermédiaire à une distance $z_1$ dudit ensemble optique,
     - un ensemble d'échantillonnage du champ lumineux (LFS) adapté pour acquérir une information spatio-directionelle des rayons formant l'image virtuelle et pour former ladite image du champ lumineux, ledit ensemble d'échantillonnage du champ lumineux comprenant
     - un photodétecteur matriciel (Det)
     - une matrice de microlentilles (ML) agencée à une distance $a$ du plan image intermédiaire, le photodétecteur étant agencé à une distance $b$

de la matrice de microlentille, chaque microlentille étant de diamètre $d_2$ et présentant une distance focale $f_2$ et étant adaptée pour former une micro-image ($\mu I$) d'une partie respective de l'image virtuelle de l'objet sur une portion respective du photodétecteur, chaque dite portion comprenant une pluralité de pixels, les micro-images formant ladite image du champ lumineux.

2. Dispositif selon la revendication précédente, dans lequel une ouverture numérique image $NA_{im,LP}$ de l'ensemble optique principal est inférieure ou égale à une ouverture numérique image $NA_{im,ML}$ de chaque microlentille.

3. Dispositif selon la revendication 1 ou 2, dans le photodétecteur est dans un plan conjugué du plan image intermédiaire par la matrice de microlentilles.

4. Dispositif selon l'une quelconque des revendications précédentes, dans lequel $\dfrac{d_1}{z_{1+a+b}} = \dfrac{d_2}{b}$ , avec $d_1$ le diamètre de l'ouverture de l'ensemble optique principal.

5. Dispositif selon l'une quelconque des revendications précédentes, dans lequel une distance c entre la matrice de microlentille et l'ensemble optique principal est supérieure à ladite distance $z_1$.

6. Dispositif selon l'une quelconque des revendications précédentes, comprenant un processeur adapté pour mettre en œuvre un algorithme de *refocusing* permettant de reconstruire une image de profondeur ou une image 3D de l'objet à partir de ladite image du champ lumineux.

7. Dispositif selon l'une quelconque des revendications précédentes, dans lequel l'ensemble optique principal et la matrice de microlentilles sont adaptés pour les rayons X.

8. Dispositif selon la revendication précédente, dans lequel l'ensemble optique principal est un « photon sieves ».

9. Dispositif selon la revendication 7 ou 8, comprenant une source de rayons X illuminant ledit objet de manière à former ledit champ lumineux de l'objet.

10. Procédé d'utilisation d'un dispositif d'imagerie plénoptique selon l'une des revendications précédentes, comprenant un ensemble optique principal (LP) et un ensemble d'échantillonnage du champ lumineux (LFS), ledit procédé comprenant les étapes suivantes :

A. placer ledit dispositif de sorte qu'une distance $z_0$ dite objet entre un objet à imager et ledit ensemble optique principal soit inférieure à une distance focale objet $f_1$ dudit ensemble optique principal de manière à former une image virtuelle intermédiaire ($I_v$),

B. acquérir, avec l'ensemble d'échantillonnage du champ lumineux, une information spatio-directionelle des rayons formant l'image virtuelle afin de former une image du champ lumineux de l'objet.

**Patentansprüche**

1.  Plenoptische Bildgebungsvorrichtung (1) zum Bilden eines Bildes des Leuchtfeldes eines Objekts (O), umfassend:

    - einen Probenhalter (SH), der angepasst ist, um das Objekt festzuhalten,
    - eine optische Hauptanordnung (LP), die angeordnet ist, um Strahlen des Leuchtfeldes des Objekts in einem Abstand $z_0$, Objekt vom Probenhalter genannt, der kleiner als ein Objekt-Fokusabstand $f_1$ der optischen Hauptanordnung ist, zu fokussieren, um ein virtuelles Zwischenbild ($I_v$) des Objekts in einer Zwischenbildebene in einem Abstand $z_1$ der optischen Anordnung zu bilden,
    - eine Probennahmeanordnung des Leuchtfeldes (LFS), die angepasst ist, um eine Raum-Richtungs-Information der Strahlen zu erfassen, die das virtuelle Bild bilden, und um das Bild des Leuchtfeldes zu bilden, wobei die Probennahmeanordnung des Leuchtfeldes umfasst
    - einen Matrix-Photodetektor (Det)
    - eine Mikrolinsen-Matrix (ML), die in einem Abstand a zur Zwischenbildebene angeordnet ist, wobei der Photodetektor in einem Abstand b von der Mikrolinsen-Matrix angeordnet ist, wobei jede Mikrolinse von einem Durchmesser $d_2$ ist und einen Fokusabstand $f_2$ aufweist, und angepasst ist, um ein Mikrobild ($\mu I$) eines jeweiligen Teils des virtuellen Bildes des Objekts auf einem jeweiligen Abschnitt des Photodetektors zu bilden, wobei jeder Abschnitt eine Vielzahl von Pixeln umfasst, wobei die Mikrobilder das Bild des Leuchtfeldes bilden.

2.  Vorrichtung nach dem vorstehenden Anspruch, wobei eine digitale Bildöffnung $NA_{im,LP}$ der optischen Hauptanordnung kleiner oder gleich einer digitalen Bildöffnung $NA_{im,ML}$ einer jeden Mikrolinse ist.

3.  Vorrichtung nach Anspruch 1 oder 2, wobei der Photodetektor in einer gemeinsamen Ebene mit der Zwischenbildebene durch die Mikrolinsen-Matrix ist.

4.  Vorrichtung nach einem der vorstehenden Ansprüche, wobei $\frac{d_1}{z_{1+a+b}} = \frac{d_2}{b}$, wobei $d_1$ der Durchmesser der Öffnung der optischen Hauptanordnung ist.

5.  Vorrichtung nach einem der vorstehenden Ansprüche, wobei ein Abstand c zwischen der Mikrolinsen-Matrix und der optischen Hauptanordnung größer als der Abstand $z_1$ ist.

6.  Vorrichtung nach einem der vorstehenden Ansprüche, umfassend einen Prozessor, der angepasst ist, um einen Algorithmus zum *Neufokussieren* umzusetzen, der es ermöglicht, ein Tiefenbild oder ein 3D-Bild des Objekts aus dem Bild des Leuchtfeldes zu rekonstruieren.

7.  Vorrichtung nach einem der vorstehenden Ansprüche, wobei die optische Hauptanordnung und die Mikrolinsen-Matrix für die Röntgenstrahlen angepasst sind.

8.  Vorrichtung nach dem vorstehenden Anspruch, wobei die optische Hauptanordnung ein "Photonensieb" ist.

9.  Vorrichtung nach Anspruch 7 oder 8, umfassend eine Röntgenstrahlenquelle, die das Objekt beleuchtet, um das Leuchtfeld des Objekts zu bilden.

10. Verfahren zum Verwenden einer plenoptischen Bildgebungsvorrichtung nach einem der vorstehenden Ansprüche, umfassend eine optische Hauptanordnung (LP) und eine Probennahmeanordnung des Leuchtfeldes (LFS), wobei das Verfahren die folgenden Schritte umfasst:

    A. Platzieren der Vorrichtung, sodass ein Abstand $z_0$, Objekt zwischen einem abzubildenden Objekt und der optischen Hauptanordnung genannt, kleiner als ein Objekt-Fokusabstand $f_1$ der optischen Hauptanordnung ist, um ein virtuelles Zwischenbild ($I_v$) zu bilden,
    B. Erfassen mit der Probennahmeanordnung des Leuchtfeldes einer Raum-Richtungs-Information der Strahlen, die das virtuelle Bild bilden, um ein Bild des Leuchtfeldes des Objekts zu bilden.

**Claims**

1.  A plenoptic imaging device (1) for forming an image of the light field of an object (O), comprising:

- a sample holder (SH) adapted to hold said object,
- a main optical assembly (LP), arranged to focus rays from the light field of said object, at a distance $z_0$ said object from the sample holder less than an object focal length $f_1$ of said main optical assembly so as to form an intermediate virtual image ($I_v$) of said object in an intermediate image plane at a distance $z_1$ from said optical assembly,
- a sampling assembly of the light field (LFS) adapted to acquire spatio-directional information of the rays forming the virtual image and to form said image of the light field, said sampling assembly of the light field comprising
- a matrix photodetector (Det)
- a microlens array (ML) arranged at a distance a from the intermediate image plane, the photodetector being arranged at a distance b from the microlens array, each microlens having a diameter $d_2$ and a having a focal length $f_2$ and being adapted to form a micro-image ($\mu I$) of a respective part of the virtual image of the object on a respective portion of the photodetector, each said portion comprising a plurality of pixels, the micro-images forming said image of the light field.

2. The device according to the preceding claim, in which a numerical aperture image $NA_{im,LP}$ of the main optical assembly is less than or equal to a numerical aperture image $NA_{im,ML}$ of each microlens.

3. The device according to claim 1 or 2, in which the photodetector is in a plane conjugate to the intermediate image plane by the microlens array.

4. The device according to any of the preceding claims, wherein $\frac{d_1}{z_{1+a+b}} = \frac{d_2}{b}$, with $d_1$ the diameter of the aperture of the main optical assembly.

5. The device according to any of the preceding claims, wherein a distance $c$ between the microlens array and the main optical assembly is greater than said distance $z_1$.

6. The device according to any of the preceding claims, comprising a processor adapted to implement a *refocusing* algorithm for reconstructing a depth image or a 3D image of the object from said image of the light field.

7. The device according to any of the preceding claims, wherein the main optical assembly and the microlens array are adapted for X-rays.

8. The device according to the preceding claim, wherein the main optical assembly is a "photon sieve".

9. The device according to claim 7 or 8, comprising an X-ray source illuminating said object so as to form said light field of the object.

10. A method of using a plenoptic imaging device according to one of the preceding claims, comprising a main optical assembly (LP) and a sampling assembly of the light field (LFS), said method comprising the following steps:

A. placing said device so that a distance $z_0$ said object between an object to be imaged and said main optical assembly is less than an object focal length $f_1$ of said main optical assembly so as to form an intermediate virtual image ($I_v$),
B. acquiring, with sampling assembly of the light field, a spatio-directional information of rays forming the virtual image in order to form an image of the light field of the object.

FIG.1A

FIG.1B

104

FIG.1C

FIG.1D

FIG.2

EP 4 413 742 B1

FIG.3

13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **REN NG** ; **LUMSDAINE, A.** ; **GEORGIEV, T.** Digital Light Field Photography. PhD thesis. Stanford University, April 2009
- Ren Ng. Digital Light Field Photography. PhD thesis. Stanford University, 2006
- **TODOR GEORGIEV** ; **GEORGI CHUNEV** ; **ANDREW LUMSDAINE**. Superresolution with the focused plenoptic camera. *SPIE Electronic Imaging*, 2011, vol. 7873, 1-13
- The focused plenoptic camera. **LUMSDAINE, A.** ; **GEORGIEV, T.** 2009 IEEE International Conference on Computational Photography (ICCP). IEEE., April 2009, 1-8
- The focused plenoptic camera. **VOIR LUMSDAINE, A.** ; **GEORGIEV, T.** 2009 IEEE International Conference on Computational Photography (ICCP). IEEE., April 2009, 1-8
- **TODOR GEORGIEV** ; **ANDREW LUMSDAINE**. Reducing plenoptic camera artifacts. *Computer Graphics Forum*, 2010, vol. 29 (6), 1955-1968
- **KIPP, L.** ; **SKIBOWSKI, M.** ; **JOHNSON, R. L.** ; **BERNDT, R.** ; **ADELUNG, R.** ; **HARM, S.** ; **SEEMANN, R.** Sharper images by focusing soft X-rays with photon sieves. *Nature*, 2001, vol. 414 (6860), 184-188
- Digital Light Field Photography. **VOIR REN NG**. PhD thesis. Stanford University, 2006
- The focused plenoptic camera. **LUMSDAINE, A.** ; **GEORGIEV, T.** 2009 IEEE International Conference on Computational Photography (ICCP). IEEE, April 2009, 1-8